Europäisches Patentamt

European Patent Office

Office européen des brevets

(19)

(11) Numéro de publication : **0 493 161 A1**

(12)
# DEMANDE DE BREVET EUROPEEN

(21) Numéro de dépôt : **91403321.2**

(22) Date de dépôt : **09.12.91**

(51) Int. Cl.$^5$ : **B64F 1/26**

(30) Priorité : **27.12.90 FR 9016341**

(43) Date de publication de la demande :
**01.07.92 Bulletin 92/27**

(84) Etats contractants désignés :
**AT BE CH DE DK ES GB GR IT LI LU NL SE**

(71) Demandeur : **S.A: André Boet Société
Anonyme dite:
26 rue Paul Doumer
F-59650 Villeneuve d'Ascq (FR)**

(72) Inventeur : **Boet, Jean-Paul
26, rue Paul Doumer
F-59650 Villeneuve d'Ascq (FR)**

(74) Mandataire : **Bonnetat, Christian
CABINET BONNETAT 23, Rue de Léningrad
F-75008 Paris (FR)**

(54) **Installation d'essais au sol pour réacteur d'aéronef à tuyère orientable.**

(57) — La présente invention concerne une installation d'essais au sol pour réacteur d'aéronef à tuyère orientable par rapport à l'axe longitudinal dudit réacteur, comprenant :

. un silencieux (3), présentant un corps de forme générale cylindrique allongé, et

. un dispositif (10) pour capter le jet de gaz d'échappement du réacteur, disposé entre le réacteur et le silencieux, ledit dispositif comprenant une chemise extérieure (11) de forme générale cylindrique, évasée au voisinage de son extrémité destinée à se trouver en regard du réacteur testé, et une chemise intérieure (12) de forme générale cylindrique.

— Selon l'invention, ladite chemise intérieure (12) comprend une paroi externe (14) et une paroi interne (15), cette dernière s'étendant sur au moins une partie de la périphérie de ladite paroi externe (14) et sur au moins une majeure partie de sa longueur, pour définir entre elles un canal (17) adapté pour permettre à un fluide de refroidissement de s'y écouler.

FIG. 2

EP 0 493 161 A1

La présente invention concerne une installation d'essais au sol pour réacteur d'aéronef à tuyère orientable ou à jet de gaz orientable par rapport à l'axe longitudinal dudit réacteur.

De telles installations comportent essentiellement un silencieux, se présentant généralement sous forme d'un corps cylindrique allongé, disposé à l'arrière du réacteur qui doit subir des essais au sol, silencieux qui collecte les gaz d'échappement du réacteur, permet de les refroidir et de les rejeter à l'atmosphère après atténuation du bruit d'échappement. Le silencieux connu de ce type est tout à fait approprié pour des réacteurs classiques qui éjectent les gaz d'échappement suivant l'axe longitudinal du réacteur.

Toutefois, une nouvelle génération de réacteurs est actuellement développée par les constructeurs, réacteurs à tuyère orientable par rapport à l'axe longitudinal de ces derniers. Lorsque le jet de gaz du réacteur ou lorsque la tuyère du réacteur en cours de test présente une certaine inclinaison par rapport audit axe longitudinal (fonctionnement dit "en vecteur"), la partie d'extrémité du silencieux la plus proche du réacteur se trouve exposée, tout au moins la portion de celle-ci qui est frappée par le jet de gaz d'échappement, à des températures très élevées, de l'ordre de 2000°C, températures auxquelles ne résistent pas la plupart des métaux et alliages classiques.

Pour résoudre ce problème, on connaît déjà, par le document FR-A-2 633 011, une installation d'essais au sol pour réacteur d'aéronef à tuyère orientable par rapport à l'axe longitudinal dudit réacteur, l'installation comprenant :

– un silencieux, présentant un corps de forme générale cylindrique allongé, destiné à être disposé derrière la tuyère dudit réacteur, et
– un dispositif pour capter le jet de gaz d'échappement du réacteur, disposé entre le réacteur et le silencieux, ledit dispositif comprenant une chemise extérieure de forme générale cylindrique, évasée au voisinage de son extrémité destinée à se trouver en regard du réacteur testé, et une chemise intérieure de forme générale cylindrique, concentrique à ladite chemise extérieure et destinée à redresser le jet de gaz d'échappement lorsque ce dernier ou la tuyère du réacteur testé présente une certaine inclinaison par rapport à l'axe longitudinal dudit réacteur. Plus particulièrement, dans ce cas, la chemise intérieure comporte un serpentin, pour la circulation d'un fluide de refroidissement tel que de l'eau, s'étendant généralement suivant les génératrices du cylindre formé par ladite chemise intérieure. Cette solution donne satisfaction dans la mesure où, d'une part, grâce à la chemise intérieure, lorsque le jet de gaz d'échappement du réacteur atteint le silencieux proprement dit, disposé en aval dudit dispositif par rapport au sens d'écoulement dudit jet, ce dernier est de nouveau au moins sensiblement parallèle à l'axe longitudinal du silencieux, et ne risque pas de frapper les parois de celui-ci, et, d'autre part, comme la chemise intérieure est refroidie, cela permet d'éviter l'emploi de matériaux réfractaires spéciaux, tels qu'une céramique, lourds, fragiles et coûteux, pour ladite chemise, qui peut être réalisée simplement en acier.

Cependant, cette solution, utilisant une circulation forcée de fluide de refroidissement dans un serpentin présente l'inconvénient de nécessiter :

– d'une part, la présence sur site d'exploitation du liquide de refroidissement tel que l'eau, par exemple, en quantité et qualité suffisantes ;
– d'autre part, l'installation d'un ensemble de traitement et/ou de refroidissement du fluide réchauffé à la sortie du serpentin.

La présente invention a pour objet d'éviter cet inconvénient.

A cet effet, l'installation, du type décrit ci-dessus, est remarquable, selon l'invention, en ce que ladite chemise intérieure comprend une paroi externe et une paroi interne, cette dernière s'étendant sur au moins une partie de la périphérie de ladite paroi externe et sur au moins une majeure partie de sa longueur, pour définir entre elles un canal adapté pour permettre à un fluide de refroidissement de s'y écouler.

Ainsi, d'une part, la paroi interne de la chemise intérieure permet de redresser le jet de gaz d'échappement, lorsqu'au cours de l'essai, le réacteur fonctionne "en vecteur", et, d'autre part, le fluide de refroidissement, notamment de l'air, circulant dans le canal défini entre lesdites parois interne et externe permet de refroidir le jet de gaz d'échappement avant qu'il n'entre dans le silencieux proprement dit.

Avantageusement, ladite chemise intérieure est ouverte à ses deux extrémités, de sorte que de l'air de refroidissement peut circuler dans ledit canal, par effet de trompe, en cours d'essai. Cette circulation "naturelle" de l'air évite les inconvénients liés à une circulation forcée de fluide, tels que l'utilisation de systèmes d'alimentation et de moyens de commande relativement complexes du débit du fluide de refroidissement.

De préférence, la paroi interne de ladite chemise intérieure est constituée de deux portions de paroi cylindriques diamétralement opposées, chacune s'étendant symétriquement de part et d'autre du plan longitudinal vertical médian de ladite chemise intérieure. En particulier, lesdites portions cylindriques s'étendent chacune sur un angle d'environ 35° de part et d'autre audit plan médian, c'est-à-dire dans la zone plus particulièrement susceptible d'être frappée par le jet de gaz d'échappement du réacteur fonctionnant "en vecteur".

Pour tenir compte des dilatations thermiques et pour des raisons d'échangeabilité, il est avantageux que lesdites portions cylindriques soient chacune divisées en une pluralité de sections longitudinales.

Pour faciliter leur mise en place et leur démontage, chacune desdites portions cylindriques est, de préférence, reliée à la paroi externe de la chemise intérieure par des profilés de maintien longitudinaux, prévus de part et d'autre de ladite portion cylindrique, et des poutres longitudinales fixées à ladite paroi externe.

Selon d'autres caractéristiques de l'invention, la chemise extérieure et la paroi externe de la chemise interne sont réalisées en acier, tandis que lesdites portions cylindriques sont réalisées en un alliage de nickel résistant à la chaleur.

Par ailleurs, pour participer au redressement du jet de gaz d'échappement, la partie d'extrémité aval de la paroi externe de la chemise intérieure peut être rétrécie.

De plus, la partie d'extrémité évasée de ladite chemise extérieure peut être adaptée pour y permettre l'écoulement d'un fluide de refroidissement.

Avantageusement, ledit silencieux associé audit dispositif pour capter le jet de gaz d'échappement est mobile par rapport au réacteur, cela afin de faciliter la mise en place et la recherche de la position optimale de fonctionnement. De plus, à son extrémité amont par rapport au sens d'écoulement du jet de gaz d'échappement du réacteur, le silencieux peut présenter une cheminée d'aspiration d'air, et, en service, la partie aval dudit dispositif peut être disposée sous ladite cheminée.

Les figures du dessin annexé feront bien comprendre comment l'invention peut être réalisée. Sur ces figures, des références identiques désignent des éléments semblables.

La figure 1 est une vue schématique avec arrachement et en coupe partielle d'une installation d'essais au sol pour réacteur d'aéronef.

La figure 2 est une vue schématique en coupe longitudinale du dispositif capteur de jet selon l'invention.

La figure 3 est la vue de face du dispositif de la figure 2.

La figure 4 montre le détail agrandi IV de la figure 3.

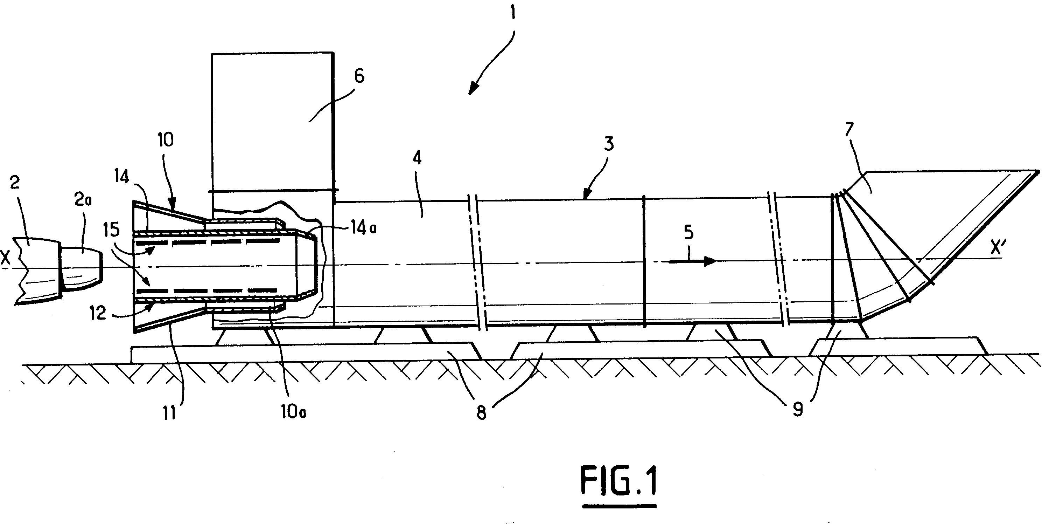

En se référant à la figure 1, l'installation 1 d'essais au sol pour réacteur 2 d'aéronef comporte un silencieux 3, présentant un corps tubulaire allongé 4 de forme générale cylindrique, disposé à l'arrière du réacteur 2 testé. A son extrémité amont par rapport au sens d'écoulement (flèche 5) du jet de gaz d'échappement du réacteur 2, le silencieux 3 présente, dans cet exemple de réalisation, une cheminée d'aspiration d'air 6. A son extrémité aval, le silencieux 3 se termine par une partie 7 coudée vers le haut, par où sont rejetés, à l'atmosphère, les gaz d'échappement refroidis. Par ailleurs, le silencieux 3 est, dans ce cas, monté mobile sur des rails 8 par l'intermédiaire de chariots 9.

De plus, entre le réacteur 2 et le silencieux 3, est prévu un dispositif 10 pour capter le jet de gaz d'échappement du réacteur 2, dont la tuyère 2a est orientable par rapport à l'axe longitudinal X,X' dudit réacteur. En service, la partie aval 10a du dispositif 10 est disposée, comme on peut le voir sur la figure 1, sous la cheminée 6.

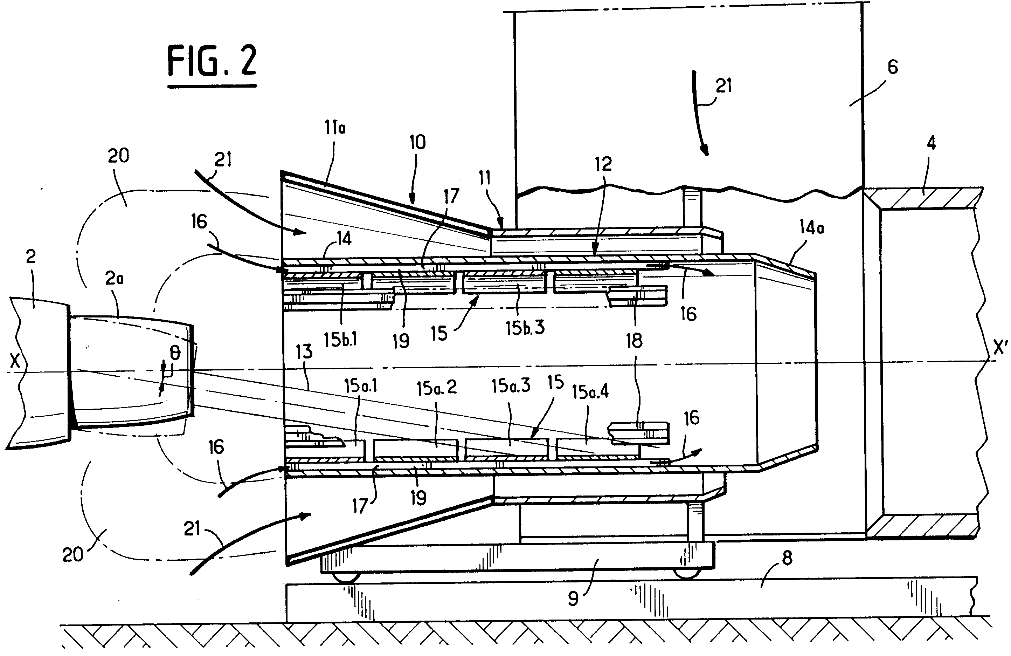

En se référant maintenant plus particulièrement à la figure 2, le dispositif 10 comprend une chemise extérieure 11 de forme générale cylindrique, évasée au voisinage de son extrémité 11a se trouvant en regard du réacteur 2 testé, et une chemise intérieure 12 de forme générale cylindrique, concentrique à la chemise extérieure 11 (en service, l'axe longitudinal des chemises extérieure 11 et intérieure 12 est avantageusement confondu avec l'axe longitudinal X,X' du réacteur 2) et destinée à redresser le jet de gaz d'échappement 13 lorsque ce dernier ou la tuyère 2a du réacteur 2 testé présente une certaine inclinaison θ par rapport à l'axe longitudinal X,X' du réacteur 2 qui peut être considérée aussi bien dans le plan vertical que dans le plan horizontal. Les chemises extérieure 11 et intérieure 12 sont fixées l'une à l'autre par tout moyen approprié (non représenté).

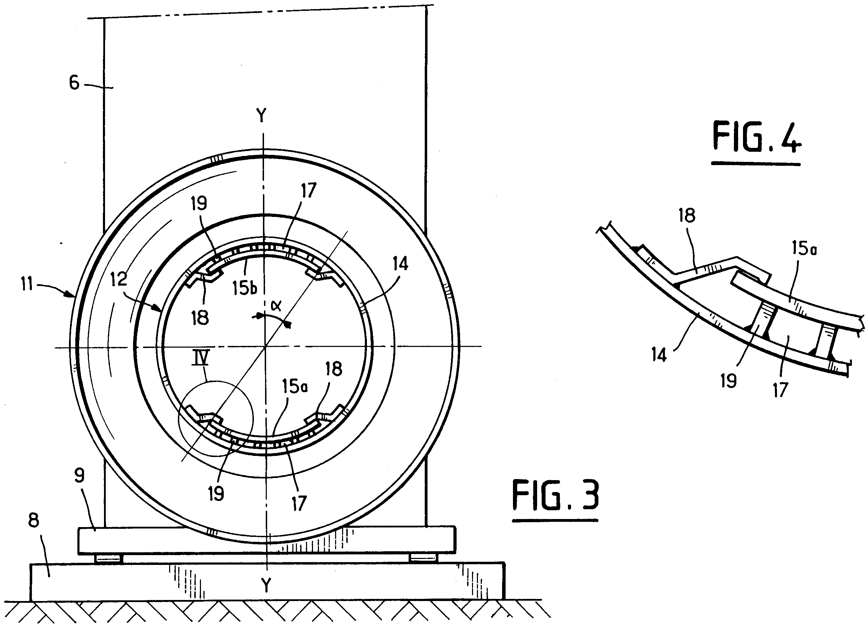

En particulier, selon l'invention, la chemise intérieure 12 comprend une paroi externe 14, cylindrique et concentrique à la chemise extérieure 11, et dont l'extrémité aval 14a dans le sens d'écoulement du jet de gaz d'échappement 13 est rétrécie, et une paroi interne 15. La chemise intérieure 12 est ouverte à ses deux extrémités de sorte que de l'air de refroidissement (flèches 16) puisse circuler par effet de trompe en cours d'essai dans le canal 17 défini entre la paroi externe 14 et la paroi interne 15. Comme on peut mieux le voir sur la figure 3, cette dernière est constituée, dans cet exemple de réalisation, de deux portions de paroi ou plaques cylindriques 15a et 15b diamétralement opposées, chacune s'étendant symétriquement de part et d'autre du plan longitudinal vertical médian Y-Y de la chemise intérieure 12, par exemple sur un angle α d'environ 35°. Seules ces portions de paroi 15a et 15b, et leurs fixations, se trouveront en contact direct avec le jet chaud lors du fonctionnement en vecteur.

Par ailleurs, comme on peut le voir sur la figure 2, chaque portion cylindrique 15a, 15b est divisée en une pluralité de sections longitudinales 15a.1-15a.4,15b.1-15b.4. Cela permet de tenir compte des dilatations thermiques grâce aux jeux prévus entre les différentes sections et de pouvoir échanger une section particulière, et non toute la portion cylindrique correspondante, lorsque cela est nécessaire.

De plus, pour faciliter la mise en place et le démontage des portions cylindriques, celles-ci sont fixées, de façon coulissante, à la paroi externe 14 de la chemise intérieure 12 par des profilés de maintien longitudinaux 18 de forme appropriée et des poutres longitudinales 19 fixées à la paroi externe 14, notamment par soudage.

La chemise extérieure 11 et la paroi externe 14 de la chemise intérieure 12 peuvent être réalisées en acier, tandis que les portions cylindriques 15a, 15b peuvent être réalisées en un alliage de nickel résistant à la chaleur, tel que de l'Inconel (marque déposée). En effet, malgré le refroidissement obtenu par la circulation d'air (flèches 16) dans le canal 17, les portions cylindriques 15a, 15b peuvent être portées à des températures relativement élevées et doivent pouvoir résister à ces températures.

En outre, la partie d'extrémité évasée 11a de la chemise extérieure 11 peut être adaptée pour y permettre la circulation d'un fluide de refroidissement. Cela est particulièrement intéressant quand, au cours de l'essai, le réacteur 2 fonctionne en inversion de poussée, en fournissant les jets de gaz d'échappement chauds 20. La chemise extérieure 11 peut alors présenter, dans cette partie d'extrémité 11a, une double enveloppe, ou un ou plusieurs serpentins, pour la circulation du fluide de refroidissement.

En cours d'essai, lorsque la tuyère 2a du réacteur 2 est inclinée d'un certain angle θ par rapport à l'axe longitudinal X,X', la chemise intérieure 12 permet de redresser et de refroidir le jet de gaz d'échappement 13, avant qu'il n'entre dans le corps 4 du silencieux proprement dit 3. Ce refroidissement, dû à l'air frais (flèches 16) circulant par effet de trompe dans le canal 17, est aidé par l'aspiration d'air frais par la cheminée 6, sous laquelle est disposée la partie aval 10a du dispositif 10 de captage de jet, en service, et par effet de trompe entre la partie évasée 11a de la chemise extérieure 11 et la chemise intérieure 12 (flèches 21). Le jet de gaz d'échappement 13 redressé et refroidi traverse alors le corps 4 du silencieux 3 et est rejeté à l'atmosphère, après atténuation du bruit d'échappement, par la partie coudée 7 du silencieux 3. La mobilité du silencieux 3 permet en outre d'adapter l'installation d'essais 1 à un type particulier de réacteur (configuration, puissance, etc...).

## Revendications

1 - Installation d'essais au sol pour réacteur d'aéronef à tuyère orientable par rapport à l'axe longitudinal dudit réacteur, l'installation comprenant :
. un silencieux, présentant un corps de forme générale cylindrique allongé, destiné à être disposé derrière la tuyère dudit réacteur, et
. un dispositif pour capter le jet de gaz d'échappement du réacteur, disposé entre le réacteur et le silencieux, ledit dispositif comprenant une chemise extérieure de forme générale cylindrique, évasée au voisinage de son extrémité destinée à se trouver en regard du réacteur testé, et une chemise intérieure de forme générale cylindrique, concentrique à ladite chemise extérieure et destinée à redresser le jet de gaz d'échappement lorsque ce dernier ou la tuyère du réacteur testé présente une certaine inclinaison par rapport à l'axe longitudinal dudit réacteur,
caractérisée en ce que ladite chemise intérieure (12) comprend une paroi externe (14) et une paroi interne (15), cette dernière s'étendant sur au moins une partie de la périphérie de ladite paroi externe (14) et sur au moins une majeure partie de sa longueur, pour définir entre elles un canal (17) adapté pour permettre à un fluide de refroidissement de s'y écouler.

2 - Installation selon la revendication 1, caractérisée en ce que ladite chemise intérieure (12) est ouverte à ses deux extrémités, de sorte que de l'air de refroidissement puisse circuler dans ledit canal (17), par effet de trompe, en cours d'essai.

3 - Installation selon la revendication 1 ou la revendication 2, caractérisée en ce que la paroi interne (15) de ladite chemise intérieure (12) est constituée de deux portions de paroi cylindriques (15a,15b) diamétralement opposées, chacune s'étendant symétriquement de part et d'autre du plan longitudinal vertical médian (Y,Y) de ladite chemise intérieure (12).

4 - Installation selon la revendication 3, caractérisée en ce que lesdites portions cylindriques (15a,15b) s'étendent chacune sur un angle (α) d'environ 35° de part et d'autre dudit plan médian (Y,Y).

5 - Installation selon la revendication 3 ou la revendication 4, caractérisée en ce que lesdites portions cylindriques (15a,15b) sont chacune divisées en une pluralité de sections longitudinales (15a.1-15a.4,15b.1-15b.4).

6 - Installation selon l'une quelconque des revendications 3 à 5, caractérisée en ce que chacune desdites portions cylindriques (15a,15b) est reliée à la paroi externe (14) de la chemise intérieure (12) par des profilés de maintien longitudinaux (18) prévus de part et d'autre de ladite portion cylindrique (15a,15b) et des poutres longitudinales (19) fixées à ladite paroi externe (14).

7 - Installation selon l'une quelconque des revendications précédentes, caractérisée en ce que la chemise extérieure (11) et la paroi externe (14) de la chemise intérieure (12) sont réalisées en acier.

8 - Installation selon l'une quelconque des revendications 3 à 7, caractérisée en ce que lesdites portions cylindriques (15a,15b) sont réalisées en un alliage de nickel résistant à la chaleur.

9 - Installation selon l'une quelconque des revendications 1 à 8, caractérisée en ce que la partie d'extrémité aval ( 14a) de la paroi externe (14) de la chemise intérieure

**EP 0 493 161 A1**

(12) est rétrécie.

**10** - Installation selon l'une quelconque des revendications 1 à 9,
caractérisée en ce que la partie d'extrémité évasée (11a) de ladite chemise extérieure (11) est adaptée pour y permettre l'écoulement d'un fluide de refroidissement.

**11** - Installation selon l'une quelconque des revendications 1 à 10,
caractérisée en ce que ledit silencieux (3) associé audit dispositif (10) pour capter le jet de gaz d'échappement est mobile par rapport au réacteur (2).

**12** - Installation selon l'une quelconque des revendications 1 à 11,
caractérisée en ce que, à son extrémité amont par rapport au sens d'écoulement (5) du jet de gaz d'échappement du réacteur (2), le silencieux (3) présente une cheminée d'aspiration d'air (6), et, en service, la partie aval (10a) dudit dispositif (10) est disposée sous ladite cheminée (6).

FIG.1

EP 0 493 161 A1

FIG. 2

EP 0 493 161 A1

FIG.4

FIG.3

EP 0 493 161 A1

Office européen
des brevets

**RAPPORT DE RECHERCHE EUROPEENNE**

Numero de la demande

EP 91 40 3321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 168 763  (WHITE)<br>* Colonne 2, ligne 38 - colonne 3, ligne 39 *<br>--- | 1,2,10 | B 64 F    1/26 |
| A | US-A-2 886 121  (WELBOURN)<br>* Colonne 3, ligne 45 - colonne 4, ligne 41 *<br>--- | 1,2 | |
| A | FR-A-1 284 614  (SOCIETE BERTIN)<br>* Page 1, colonne de droite, lignes 21-38 *<br>--- | 1,11 | |
| A | DE-A-1 476 529  (GRÜNZWEIG & HARTMANN)<br>* Page 5, lignes 4-22 *<br>--- | 1 | |
| D,A | FR-A-2 633 011  (ANDRE BOET S.A.)<br>* Brevet entier *<br>----- | 1 | |

**DOMAINES TECHNIQUES RECHERCHES (Int. Cl.5)**

B 64 F
F 02 K

**Le présent rapport a été établi pour toutes les revendications**

| Lieu de la recherche | Date d'achèvement de la recherche | Examinateur |
|---|---|---|
| LA HAYE | 26-03-1992 | HAUGLUSTAINE H.P.M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................
& : membre de la même famille, document correspondant

EPO FORM 1503 03.82 (P0402)